# EUROPEAN PATENT APPLICATION

(11) **EP 4 598 093 A1**
(43) Date of publication of application: **06.08.2025**
(21) Application number: 22960745.2
(22) Date of filing: 26.09.2022
(51) Int. Cl.: H04W 24/02, H04W 16/26, H04W 84/06

(54) **INTERFERENCE CONTROL RELATING TO DYNAMIC COMMUNICATION CELL**

(71) Applicant: Rakuten Mobile, Inc., Tokyo 158-0094 (JP)
(72) Inventor: AOYAGI Kenichiro, Tokyo 158-0094 (JP); KITAGAWA Koichiro, Tokyo 158-0094 (JP)
(74) Representative: Betten & Resch
(86) International application number: PCT/JP2022/035630
(87) International publication number: WO 2024/069680

(57) **Abstract**

A communication control apparatus includes a processor that performs: by an interference detector, detecting interference between a dynamic communication cell provided by a dynamic communication station, and a surrounding communication cell around the dynamic communication station; and by an interference reducer, implementing an interference reduction measure to reduce interference between the dynamic communication cell and the surrounding communication cell, in at least one of the dynamic communication cell and the surrounding communication cell. The dynamic communication station is the IAB node comprising the MT that functions as a communication device to a parent base station and the DU that functions as a child base station to a communication device and provides the dynamic communication cell, and the interference detector detects interference between the dynamic communication cell and the surrounding communication cell, based on the communication measurement result by the IAB node.

## Description

### BACKGROUND OF THE INVENTION

### 1. Field of the Invention

The present disclosure relates to interference control concerning dynamic communication cell.

### 2. Description of the Related Art

The number, types, and applications of wireless communication devices (hereinafter also collectively referred to as communication devices), represented by smartphones and Internet of Things (IoT) devices, continue to increase, and wireless communication standards continue to be expanded and improved. For example, the commercial service of the fifth generation mobile communication system known as "5G" started in 2018, and the standards are still being developed by the 3GPP (Third Generation Partnership Project). Efforts are also underway to develop standards for "6G" or the sixth generation mobile communication system, which would be the next generation of wireless communication standards following 5G.

Patent Literature 1: JP-A-2010-278886

### SUMMARY OF THE INVENTION

In order to accommodate the explosive increase of the number of communication devices or the miniaturization of communication cells due to the adoption of higher frequency communication radio waves such as millimeter waves and the like, various types of communication stations can be deployed in addition to existing base stations (typically, terrestrial base stations fixedly installed on the ground). Each communication station is expected to provide a communication cell to communication devices similarly to existing base stations. This can cause interference between the communication cells provided by the various types of communication stations to communication devices around them and the existing communication cells around such communication stations (typically, the terrestrial communication cells provided by the terrestrial base stations).

The present disclosure was made in consideration of the situation, and its purpose is to provide a communication control apparatus and the like that can effectively reduce interference between communication cells.

In order to solve the above issue, a communication control apparatus in a certain aspect of the present disclosure includes at least one processor that performs: by an interference detector, detecting interference between a dynamic communication cell provided by a dynamic communication station to a communication device around it, and a surrounding communication cell around the dynamic communication station; and by an interference reducer, implementing an interference reduction measure to reduce interference between the dynamic communication cell and the surrounding communication cell, in at least one of the dynamic communication cell and the surrounding communication cell.

According to the aspect, interference between the dynamic communication cell and the surrounding communication cell can be effectively reduced. Here, the dynamic communication cell means, for example, a communication cell that can vary in space or time. For example, a moving communication station is an example of the dynamic communication station that provides a spatially varying (typically, moving) dynamic communication cell. Besides, a communication station that can switch between an active state and an inactive state is an example of the dynamic communication station that provides a dynamic communication cell that varies in time (typically, is switched on and off).

Another aspect of the present disclosure is a communication control method. The method includes: detecting interference between a dynamic communication cell provided by a dynamic communication station to a communication device around it, and a surrounding communication cell around the dynamic communication station; and implementing an interference reduction measure to reduce interference between the dynamic communication cell and the surrounding communication cell, in at least one of the dynamic communication cell and the surrounding communication cell.

Further another aspect of the present disclosure is a computer-readable medium. The medium stores a communication control program causing a computer to perform: detecting interference between a dynamic communication cell provided by a dynamic communication station to a communication device around it, and a surrounding communication cell around the dynamic communication station; and implementing an interference reduction measure to reduce interference between the dynamic communication cell and the surrounding communication cell, in at least one of the dynamic communication cell and the surrounding communication cell.

In addition, any combination of the above components, and any conversion of the expression of the present disclosure among methods, devices, systems, recording media, computer programs and the like are also encompassed within the disclosure.

According to the present disclosure, interference between communication cells can be effectively reduced.

### BRIEF DESCRIPTION OF THE DRAWINGS

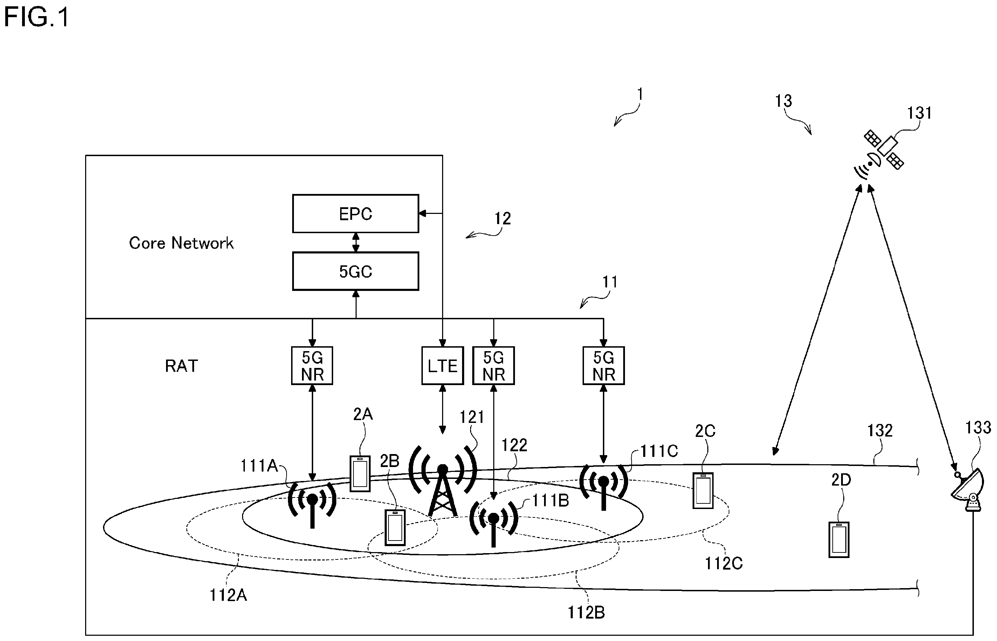

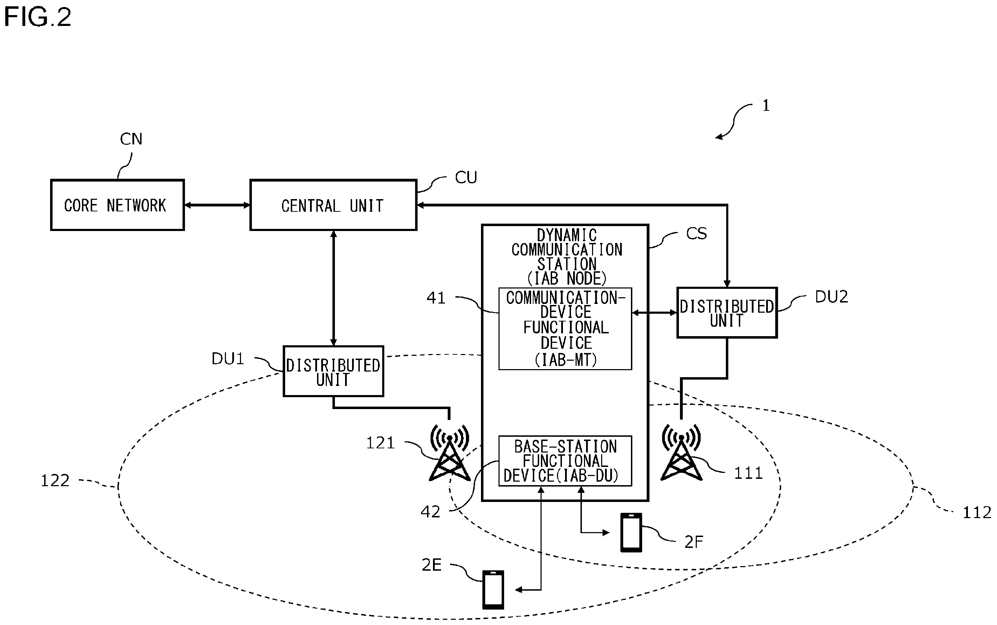

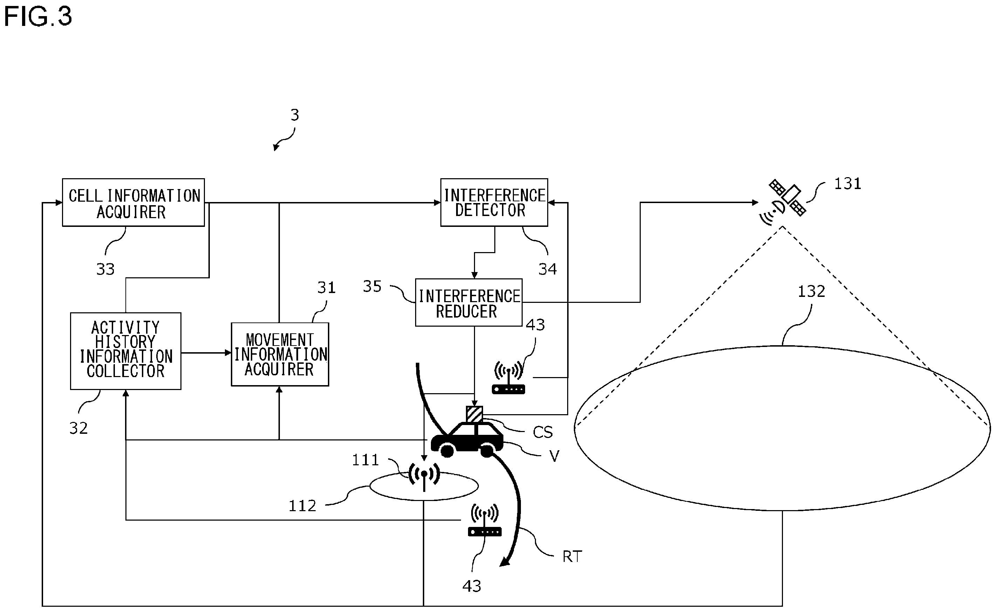

Figure 1 schematically shows the overview of a wireless communication system to which the communication control apparatus is applied. Figure 2 schematically shows the general configuration of the wireless communication system to which the communication control apparatus is applied. Figure 3 is a functional block diagram of the communication control apparatus.

### DETAILED DESCRIPTION OF THE INVENTION

Figure 1 schematically shows an overview of a wireless communication system 1 to which the communication control apparatus according to an embodiment of the present disclosure is applied. The wireless communication system 1 includes 5G wireless communication system 11, 4G wireless communication system 12, and satellite communication system 13. 5G wireless communication system 11 that complies with the fifth generation mobile communication system (5G) uses NR (New Radio) or 5G NR (Fifth Generation New Radio) as the radio access technology (RAT) and 5GC (Fifth Generation Core) as the core network. 4G wireless communication system 12 that complies with the fourth generation mobile communication system (4G) uses LTE (Long Term Evolution) or LTE-Advanced as the radio access technology and EPC (Evolved Packet Core) as the core network. Satellite communication system 13 is for satellite communication via communication satellite 131. Although not shown in the figure, the wireless communication system 1 may include wireless communication networks of a generation prior to 4G, a generation later than 5G (e.g., 6G), or any wireless communication networks that are not associated with generations, such as Wi-Fi (registered trademark).

The 5G wireless communication system 11 may include a plurality of 5G base stations 111A, 111B, and 111C (hereinafter also collectively referred to as 5G base station 111) installed on the ground capable of communicating by 5G NR with communication devices or communication devices 2A, 2B, 2C, and 2D (hereinafter also collectively referred to as communication device(s) 2) such as smartphones, which are also referred to as UE (User Equipment). 5G base station 111 is also referred to as gNodeB (gNB). The coverage or support range of each 5G base station 111A, 111B and 111C is referred to as a cell 112A, 112B and 112C (hereinafter also collectively referred to as 5G cell 112).

The size of the 5G cell 112 of each 5G base station 111 is freely selected, but typically ranges from a few meters to several tens of kilometers in radius. Although there is no established definition, cells with a radius of a few meters to ten meters are called femtocells, cells with a radius of ten meters to several tens of meters are called picocells, cells with a radius of several tens of meters to several hundred meters are called microcells, and cells with a radius of more than several hundreds of meters are called macrocells. In 5G, high frequency radio waves such as millimeter waves are often used, and their high tendency to propagate in a straight-line causes radio waves to be blocked by obstacles, shortening the communication distance. For the reason, 5G tends to use more small cells than 4G and earlier generations.

The communication device 2 can conduct 5G communication when it is located within at least one of a plurality of 5G cells 112A, 112B and 112C. In the example shown in the figure, communication device 2B in 5G cells 112A and 112B can communicate with both 5G base stations 111A and 111B by 5G NR. In addition, the communication device 2C in the 5G cell 112C can communicate with the 5G base station 111C by 5G NR. Communication device 2A and 2D are outside of all 5G cells 112A, 112B and 112C, so they are not able to communicate by 5G NR. The 5G NR-based 5G communication between each communication device 2 and each 5G base station 111 is managed by the 5GC, which is the core network. For example, the 5GC transfers data to and from each 5G base station 111, transfers data to and from external networks such as the EPC, the satellite communication system 13 and the Internet, and manages the movement of the communication device 2.

The 4G wireless communication system 12 includes a plurality of 4G base stations 121 (only one of them is shown in Figure 1) installed on the ground that can communicate with the communication device 2 by LTE or LTE-Advanced. The base station 121 in 4G is referred to as eNodeB (eNB). Similar to each 5G base station 111, the communication range or support range of each 4G base station 121 is also called a cell and is shown as 122.

The communication device 2 can conduct 4G communication when it is located within 4G cell 122. In the example shown in the figure, the communication devices 2A and 2B in the 4G cell 122 can communicate with the 4G base station 121 by LTE or LTE-Advanced. Communication device 2C and 2D are outside the 4G cell 122 and are not able to communicate by LTE or LTE-Advanced. The 4G communication by LTE and LTE-Advanced between each communication device 2 and each 4G base station 121 is managed by the EPC, which is the core network. For example, the EPC manages the transfer of data to and from each 4G base station 121, the transfer of data to and from external networks such as 5GC, the satellite communication system 13 and the Internet, and the movement management of the communication device 2.

If we take a look at each communication device 2A, 2B, 2C and 2D in the example shown in the figure, the communication device 2A is in a state that enables 4G communication with 4G base station 121, and communication device 2B is in a state that enables 5G communication with 5G base stations 111A and 111B and 4G communication with 4G base station 121, and communication device 2C is in a state that enables 5G communication with 5G base station 111C. When there are multiple base stations (111A, 111B and 121) as in the case of communication device 2B, one base station is selected as the most suitable for the communication device 2B in terms of communication quality and the like, under the control of the 5GC or the EPC, which is the core network. For the communication device 2D that is not in a state that enables 5G communication with any 5G base station 111 or 4G communication with any 4G base station 121, the communication is conducted using the satellite communication system 13 described below.

The satellite communication system 13 is the wireless communication system using communication satellites 131 as non-terrestrial base stations. The communication satellites 131 are low-earth-orbit satellites flying in low-earth-orbit outer space of 500 to 700 km above the ground. Similar to 5G base station 111 and 4G base station 121, the communication range or support range of each communication satellite 131 is also called a cell and is shown as 132. Thus, a communication satellite 131 as a non-terrestrial base station provides a satellite communication cell 132 as a non-terrestrial communication cell onto the ground. Communication device 2 on the ground can conduct satellite communication when it is inside the satellite communication cell 132. Similar to 5G base station 111 in the 5G wireless communication system 11 and 4G base station 121 in the 4G wireless communication system 12, communication satellite 131 as the base station in the satellite communication system 13 is capable of wireless communication directly or indirectly via aircraft and the like with the communication device 2 within the satellite communication cell 132. The radio access technology used by the communication satellite 131 for wireless communication with the communication device 2 in the satellite communication cell 132 may be 5G NR, the same as the 5G base station 111, or LTE or LTE-Advanced, the same as the 4G base station 121, or any other radio access technology that the communication device 2 can use. Therefore, there is no need for the communication device 2 to have any special functions or components for satellite communication.

The satellite communication system 13 is equipped with a gateway 133 as a ground station that is installed on the ground and can communicate with the communication satellite 131. The gateway 133 is equipped with a satellite antenna to communicate with the communication satellite 131, and is connected to the 5G base station 111 and the 4G base station 121 as terrestrial base stations that constitute the terrestrial network (TN). In such a way, the gateway 133 connects the non-terrestrial network (NTN), which is including communication satellites 131 as a non-terrestrial base station or a satellite base station, and the terrestrial network TN, which includes terrestrial base stations 111 and 121, for mutual communication. When the communication satellite 131 conducts 5G communication with the communication device 2 in the satellite communication cell 132 by 5G NR, the 5GC connected via the gateway 133 and the 5G base station 111 in the TN (or the 5G radio access network) is used as the core network. When the communication satellite 131 conducts 4G communication with the communication device 2 in the satellite communication cell 132 by LTE or LTE-Advanced, the EPC connected via the gateway 133 and the 4G base station 121 in the TN (or the 4G radio access network) is used as the core network. In such a way, appropriate coordination is made between different wireless communication systems such as 5G wireless communication system 11, 4G wireless communication system 12, satellite communication system 13 and the like through the gateway 133.

Satellite communication by communication satellites 131 is mainly used for covering areas with no or few terrestrial base stations such as 5G base stations 111 and 4G base stations 121 and the like. In the example shown in the figure, a communication device 2D that is outside the communication cells of all the terrestrial base stations communicates with the communication satellite 131. On the other hand, communication devices 2A, 2B and 2C that are in good communication with either of the terrestrial base stations, are also in the satellite communication cell 132 and can communicate with the communication satellite 131. However, by communicating with the terrestrial base stations instead of the communication satellite 131 as the satellite base station in principle, the limited communication resources (including power) of the communication satellite 131 are saved for the communication device 2D and the like. The communication satellite 131 uses beamforming to direct the communication radio wave to the communication device 2D in the satellite communication cell 132, thereby the communication quality with the communication device 2D is improved.

The size of the satellite communication cell 132 of the communication satellite 131 as a satellite base station depends on the number of beams emitted by the communication satellite 131. For example, a satellite communication cell 132 with a diameter of about 24 km can be formed by combining up to 2,800 beams. As illustrated, a satellite communication cell 132 is typically larger than a terrestrial communication cell such as a 5G cell 112 or a 4G cell 122, and could contain one or more 5G cells 112 or 4G cells 122 inside it. The above example shows a communication satellite 131 flying in low-earth-orbit outer space at a height of about 500 km to 700 km above the ground as a flying non-terrestrial base station. However, a communication satellite flying in geostationary orbit or other higher orbit in outer space, or an unmanned or manned aircraft or a drone flying in stratosphere or other lower (e.g., about 20 km above the ground) atmosphere may be used as a non-terrestrial base station in addition to or instead of the communication satellite 131.

Figure 2 schematically shows the general configuration of the wireless communication system 1 to which the communication control apparatus according to an embodiment of the present disclosure is applied. As shown also in Figure 1, the wireless communication system 1 is usually constructed by the terrestrial communication cells 112 and 122 (hereinafter also referred to as fixed communication cells) provided by the terrestrial base stations 111 and 121 stationarily installed on the ground (hereinafter also referred to as fixed base stations). However, mobile communication cannot be performed outside fixed communication cells, and the quality of mobile communications might be low depending on time or place even within fixed communication cells. Although the wireless communication system 1 can also include the satellite communication system 13 that uses the communication satellite 131 as a non-terrestrial base station or moving base station, it is impractical to supplement the terrestrial network of terrestrial base stations 111 and 121 solely by the communication satellites 131.

To solve such an issue, it is preferable to introduce a dynamic communication station CS to supplement the fixed communication cell 112 or 122 provided by the fixed base station 111 or 121, as schematically shown in Figure 2. A dynamic communication station CS is, for example, a communication station capable of providing a dynamic communication cell that can vary in space or time. For example, a moving communication station (as shown in Figure 3 described below) is an example of a dynamic communication station CS that provides a spatially varying (i.e., moving) dynamic communication cell. Besides, a communication station that can switch between an active state that provides a dynamic communication cell and an inactive state that does not provide a dynamic communication cell is an example of a dynamic communication station CS that provides a dynamic communication cell that varies in time (i.e., is switched on and off).

It should be noted that a dynamic communication station CS may be, for example, a communication station whose operating time is limited to a specific time period, or it may be an on-demand communication station that can be adaptively switched between an inactive state and an active state in accordance with the communication demand of a communication device and the like. Besides, examples of a dynamic communication station CS include a moving base station such as the communication satellite 131 that itself functions as a base station (alternatively, it may be a fixed base station that can switch between an active state and an inactive state), and something like a repeater that communicates with an existing fixed base station 111 or 121 to expand an existing fixed communication cell 112 or 122 (hereinafter also referred to as a relay station). The dynamic communication station CS in the example in Figures 2 and 3 is an IAB (Integrated Access and Backhaul) node.

IAB is a technology specified in 5G to expand a communication cell of a parent node, utilizing wireless backhaul between a base station that serves as an IAB donor (parent node) and an IAB node (child node) or between parent and child IAB nodes (where an IAB node closer to the IAB donor is the parent node, and an IAB node far from the IAB donor is the child node). Here, "expansion of a communication cell" includes not only expanding the area covered by an existing communication cell, but also improving the communication quality of at least part of an existing communication cell. Furthermore, "expansion of the area covered by a communication cell" includes not only expanding the area in the horizontal plane of an existing communication cell, but also expanding an existing communication cell vertically, e.g., underground or to the upper or lower floors of a building.

In Figure 2, the dynamic communication station CS as the IAB node includes a communication-device functional device 41 that functions as a communication device for a parent node (a parent base station) including the fixed base station 111 or 121 and a base-station functional device 42 that functions as a child base station for a communication device UE and provides the dynamic communication cell. In 5G, the communication-device functional device 41 is specified as a MT (Mobile Termination) or IAB-MT, and the base-station functional device 42 is specified as a DU (Distributed Unit) or IAB-DU. It should be noted that, in other wireless communication systems including generations after 5G, functions similar to IAB, MT, DU, CU (Central Unit described below) may be provided under different names, but such similar functions may be utilized as IAB, MT, DU, CU in the present embodiment.

Two fixed base stations 111 and 121 are illustrated in Figure 2. The first fixed base station 121 as a 4G base station provides the first fixed communication cell 122 as a 4G cell, and the second fixed base station 111 as a 5G base station provides the second fixed communication cell 112 as a 5G cell. In the example in Figure 2, the baseband function of each fixed base station 111 and 121 is divided into a central unit (CU) on the core network CN side and a distributed unit (DU) on the communication device UE side. The first distributed unit DU1 of the first fixed base station 121 is provided near the radio equipment such as an antenna of the first fixed base station 121, typically in the same base station facility as the radio equipment. The second distributed unit DU2 of the second fixed base station 111 is provided near the radio equipment such as an antenna of the second fixed base station 111, typically in the same base station facility as the radio equipment. Although the central unit CU in the example shown in the figure is shared by the first fixed base station 121 (the first distributed unit DU1) and the second fixed base station 111 (the second distributed unit DU2), separate central units may be provided for each of the fixed base stations 111 and 121. The central unit CU is connected to the core network CN. The connection between the radio equipment such as an antenna in each of the fixed base stations 111 and 121 and each of the distributed units DU1, DU2, the connection between each of the distributed units DU1, DU2 and the central unit CU, and the connection between the central unit CU and the core network CN, are typically wired by conductors or optical fibers and the like, although some or all of those connections may be wireless.

The communication-device functional device 41 (IAB-MT) of the dynamic communication station CS, depending on the position of the dynamic communication station CS, can connect wirelessly with the distributed unit DU of either fixed base station 111 or 121. In the example in Figure 2, the communication-device functional device 41 is connected wirelessly to the second distributed unit DU2 of the second fixed base station 111. In such a case, the dynamic communication station CS functions as a child node for the second fixed base station 111 as a parent node (a parent base station) or an IAB donor, and expands the second fixed communication cell 112 by the second fixed base station 111 as a parent node. Then, the base-station functional device 42 (IAB-DU) of the dynamic communication station CS provides a dynamic communication cell (not shown) or a moving communication cell as expanded communication cell of the second fixed communication cell 112 to the communication device UE. In the example in Figure 2, two communication devices 2E and 2F connected to the base-station functional device 42 of the dynamic communication station CS are shown schematically. The first communication device 2E being inside the first fixed communication cell 122 and outside the second fixed communication cell 112, substantially communicates with the second fixed base station 111 via the dynamic communication station CS. The second communication device 2F being inside the overlapping area of the first fixed communication cell 122 and the second fixed communication cell 112, substantially communicates with the second fixed base station 111 via the dynamic communication station CS. It should be noted that the dynamic communication station CS as an IAB node may expand a moving communication cell such as the satellite communication cell 132, with a moving base station such as the communication satellite 131 as a parent base station.

The dynamic communication station CS when realized as a moving communication station (such as an IAB node) is attached to a movable object, except when it can move (or fly) autonomously like the communications satellite 131. A movable object is any movable thing or person and includes, for example, automobiles, trains, motorcycles, bicycles, airplanes, drones, ships, and any other vehicles. Besides, the moving dynamic communication station CS may be a communication device 2 used by a moving person, for example, a communication device 2 equipped with a tethering function or personal hotspot function. Since such a communication device 2 (dynamic communication station CS) usually functions as a wireless LAN access point, the RAT (e.g., 5G NR) used by the base station to be expanded (e.g., the second fixed base station 111) and the RAT used by the expanding dynamic communication station CS may be different.

Figure 3 is a functional block diagram of the communication control apparatus 3 according to the present embodiment. The communication control apparatus 3 includes a movement information acquirer 31, an activity history information collector 32, a cell information acquirer 33, an interference detector 34, and an interference reducer 35. Some of these functional blocks can be omitted as long as the communication control apparatus 3 realizes at least some of the operations or effects described below. These functional blocks are realized by the cooperation of hardware resources, such as the central processing unit, memory, input devices, output devices, and peripheral devices connected to the computer, and software that is executed using them. Regardless of the type of computer or its installation location, each of the above functional blocks may be realized with the hardware resources of a single computer, or by combining hardware resources distributed across multiple computers. Especially in the present embodiment, some or all of functional blocks of the communication control apparatus 3 may be realized in a centralized or distributed manner by computer or processor provided in the communication device 2, the dynamic communication station CS (including the movable object V), the base station (the distributed unit DU or the central unit CU), the gateway 133, and the core network CN.

In the example in Figure 3, the dynamic communication station CS as an IAB node is installed to a vehicle V as a movable object. The vehicle V to which the dynamic communication station CS is installed may move along predetermined or any movement routes. In the example in Figure 3, a vehicle V with a dynamic communication station CS attached moves on the ground along any movement route RT. On the ground around the movement route RT, there are the terrestrial communication cell 112 (e.g., 5G cell) provided by the terrestrial base stations 111 (e.g., 5G base station), and the non-terrestrial communication cell 132 (e.g., satellite communication cell) provided by the non-terrestrial base station 131 (e.g., communication satellite).

The dynamic communication station CS attached to the vehicle V may provide a dynamic communication cell (not shown) as an extended communication cell around the communication cell 112 or 132, with the illustrated terrestrial base station 111 or non-terrestrial base station 131 as the parent base station. The following describes an example in which the dynamic communication station CS attached to the vehicle V provides a dynamic communication cell (not shown) as an extended communication cell around the communication cell, with another base station (not shown) as the parent base station. In such a case, the existing communication cells 112 and 132, which are not parent communication cells, are neighboring communication cells to the dynamic communication cell (not shown) provided by the dynamic communication station CS moving or passing in their vicinity. It should be noted that, if the dynamic communication station CS attached to the vehicle V itself functions as a base station, it may provide a dynamic communication cell (not shown) around it without a parent base station.

Although the following illustrates the dynamic communication station CS that moves along the movement route RT with the vehicle V, the description applies similarly to a dynamic communication station CS that is fixedly installed on the ground and the like and can switch between an active state and an inactive state. In other words, a dynamic communication station CS approaching the neighboring communication cell 112 or 132 and a dynamic communication station CS that is fixedly installed in the vicinity of the neighboring communication cell 112 or 132 and can switch from an inactive state to an active state can be seen as equivalents. Besides, a dynamic communication station CS moving away from the neighboring communication cell 112 or 132 and a dynamic communication station CS that is fixedly installed in the vicinity of the neighboring communication cell 112 or 132 and can switch from an active state to an inactive state can be seen as equivalents.

The movement information acquirer 31 acquires movement information concerning the movement of the dynamic communication station CS attached to the vehicle V. The movement information includes at least one of the following: the movement route RT of the vehicle V or the dynamic communication station CS, the arrival time of the vehicle V or the dynamic communication station CS at each location on the movement route RT, the traffic condition on the movement route RT, the movement speed of the vehicle V or the dynamic communication station CS, the movement direction of the vehicle V or the dynamic communication station CS, and the current position of the vehicle V or the dynamic communication station CS. Some or all of the movement information can be acquired from the vehicle V or the dynamic communication station CS itself, the communication device 2 used by a person traveling in the vehicle V, a movement instruction device (not shown) that remotely gives movement instruction to the vehicle V such as a bus and a train and the like. For example, the movement route RT, the arrival time at each location on the movement route RT, and the traffic condition on the movement route RT can be acquired from map applications or navigation applications installed in the vehicle V, the dynamic communication station CS, the communication device 2, the movement instruction device and the like. Besides, the movement speed, the movement direction, and the current position can be acquired from a positioning module such as a GPS module installed in the vehicle V, the dynamic communication station CS, the communication device 2 and the like.

The movement information acquirer 31 may estimate some or all of the current movement information of the dynamic communication station CS attached to the vehicle V, based on activity history information collected by the activity history information collector 32. The activity history information collector 32 collects activity history information of at least one of one or more specified or unspecified communication devices 2, the dynamic communication station CS or the vehicle V whose movement information is to be estimated, and other dynamic communication stations CS or vehicles V. It should be noted that the activity history information collected by the activity history information collector 32, can also be utilized by the interference detector 34 described below.

For example, an artificial intelligence (AI)/machine learning (ML) function such as the NWDAF (Network Data Analytics Function) or the LMF (Location Management Function) introduced in the 5GC as the core network CN of 5G, can be utilized as the activity history information collector 32. The NWDAF is responsible for collecting and analyzing data on the network including 5G network. Specifically, the NWDAF collects and accumulates activity history information (including history information on the base station to which the communication device 2, the dynamic communication station CS or the vehicle V were connected, or the location of the communication device 2, the dynamic communication station CS or the vehicle V) concerning various activities performed on the network by a number of communication devices 2, the dynamic communication stations CS or the vehicles V connected to the network, and utilizes the analysis results for traffic control on the network, for example. The LMF manages the physical location of a number of communication devices 2, the dynamic communication stations CS or the vehicles V on the network including 5G network. It should be noted, in other wireless communication systems, including those of later generations than 5G, functions similar to the NWDAF or the LMF might be provided under different names. Such similar functions may be utilized in the present embodiment instead of or in addition to the NWDAF or the LMF.

Besides, servers used by service providers that provide map services, navigation services, location tracking services and the like for a large number of communication devices 2, the dynamic communication stations CS or the vehicles V connected to the network, can also be utilized as the activity history information collector 32. In these servers, the activity history information related to the various activities performed in connection with the services provided to the many communication devices 2, the dynamic communication stations CS or the vehicles V connected to the network (including history information on the location of the communication device 2, the dynamic communication station CS or the vehicle V) can be collected.

From the NWDAF, the LMF, or the servers of service providers as the activity history information collector 32, statistical information concerning the activities on the network of an unspecified number of the communication devices 2, the dynamic communication stations CS, or the vehicles V connected to the network (including statistical information concerning the base stations to which they were connected) or historical information concerning their physical locations can be acquired. In the example in Figure 3, activity history information such as congestion or communication traffic during each time period, in the area between the terrestrial communication cell 112 and the non-terrestrial communication cell 132 where the vehicle V is traveling through at the current time or in the where the vehicle V traveling on the movement route RT will arrive or travel through at a future time can be acquired for the movement information acquirer 31 or the interference detector 34.

Based on the activity history information (including congestion information or traffic information on the network or physically) of these unspecified number of communication devices 2, dynamic communication stations CS, or vehicles V during each time period, the movement information acquirer 31 can accurately estimate the position or the movement of the dynamic communication station CS or the vehicle V, which is the target of communication control by the communication control apparatus 3, at the present or future time. For example, if the communication traffic amount or the number of communication devices 2, dynamic communication stations CS, or vehicles V were significantly high in the past in specific area among a plurality of areas where the dynamic communication station CS or the vehicle V is likely to be located in the present or future time period when the movement information acquirer 31 estimates the movement information of the dynamic communication station CS or the vehicle V, it can be estimated that the dynamic communication station CS or the vehicle V is likely to be located in such specific area.

From the NWDAF, the LMF, or the servers of service providers as the activity history information collector 32, statistical information concerning the activities on the network (including statistical information concerning the connected base stations) not only of an unspecified number of communication devices 2, dynamic communication stations CS, or vehicles V but also of the dynamic communication station CS or the vehicle V itself for the estimation or the communication control, or historical information concerning their physical locations can be acquired. Based on the activity history information of the dynamic communication station CS or the vehicle V itself during each time period, the movement information acquirer 31 can accurately estimate the position or the movement of the dynamic communication station CS or the vehicle V at the present or future time.

For example, if the dynamic communication station CS or the vehicle V was frequently located in a specific area in the present or future time period when the movement information acquirer 31 estimates the movement information of the dynamic communication station CS or the vehicle V, it can be estimated that the dynamic communication station CS or the vehicle V is highly likely to be located in such specific area.

In addition to or instead of the activity history information on past days as described above, the movement information acquirer 31 may utilize the activity history information of the dynamic communication station CS or the vehicle V itself immediately before (e.g., within one hour) estimating the movement information of the dynamic communication station CS or the vehicle V. For example, if the dynamic communication station CS or the vehicle V was moving in a specific area in a specific direction within 30 minutes before the movement information acquirer 31 estimates the movement information of the dynamic communication station CS or the vehicle V, it can be presumed that the dynamic communication station CS or the vehicle V is highly likely to be located in the specific area or the proximity area where they can move in 30 minutes toward the specific direction from the specific area.

It should be noted that the activity history information collector 32 may collect as activity history information the measurement results of one or more sensors 43 that exist or are installed in the vicinity of the surrounding communication cell 112 or 132 through which the dynamic communication station CS passes. The type or the number of each sensor 43 is not limited, but for the purpose of acquiring movement information of the dynamic communication station CS or the vehicle V as described above, the sensors 43 that can directly or indirectly detect the dynamic communication station CS or the vehicle V moving in the vicinity may be utilized. Besides, for the purpose of interference detection described below, the sensors 43 capable of directly or indirectly measuring communication quality or interference may be utilized. The sensor 43 may be, for example, installed to a communication device 2 such as a smartphone or to a surrounding base station 111 or 131, but may be something like an IoT device equipped with minimum communication functions capable of sharing the measurement results with the radio access network (RAN) that includes a base station or the core network CN.

The cell information acquirer 33 acquires cell placement information concerning the placement of the surrounding communication cells 112 and 132 whose interferences are detected by the interference detector 34. Specifically, the cell information acquirer 33 acquires the placement of the surrounding communication cells 112 and 132 on the ground as shown in the figure, from each surrounding base station 111 or 131 itself that provides each such surrounding communication cell 112 or 132 or the core network CN which centrally manages the information concerning each surrounding communication cell 112 or 132 and the like. The cell placement information not only enables recognition of the center position of each surrounding communication cell 112 or 132 or the shape or the size of its coverage area (communication range), but also enables recognition of the presence or absence of surrounding communication cells 112 and 132 in each area on the ground, the types of surrounding communication cells 112 and 132 (terrestrial communication cell or non-terrestrial communication cell), the density of surrounding communication cells 112 and 132, the continuity or overlap of surrounding communication cells 112 and 132, the distance from the center position or the edge of a surrounding communication cells 112 and 132 and the like. The interference detector 34 refers to the cell placement information together with other information (such as the movement information acquired by the movement information acquirer 31) to identify a surrounding communication cell 112 or 132 around the dynamic communication station CS moving together with the vehicle V.

The interference detector 34 detects interference between the dynamic communication cell (not shown) provided by the dynamic communication station CS to a communication device 2 (not shown) around it, and the surrounding communication cell 112 or 132 around the dynamic communication station CS. For example, when the dynamic communication station CS in an active state approaches the surrounding communication cell 112 or 132, the communication radio waves of the dynamic communication cell deployed by the dynamic communication station CS may interfere with the communication radio waves of the surrounding communication cell 112 or 132. Besides, when the dynamic communication station CS switches from an inactive state to an active state in the vicinity of the surrounding communication cell 112 or 132, the communication radio waves of the dynamic communication cell newly deployed by the dynamic communication station CS may interfere with the communication radio waves of the surrounding communication cell 112 or 132. It should be noted that the interference detector 34 may detect the traffic amount in at least one of the dynamic communication cell and the surrounding communication cell 112 or 132, and if it is noticeably low, it may determine that interference in actual communication is unlikely to occur even if both communication cells overlap.

If the dynamic communication cell by the dynamic communication station CS interferes with the surrounding communication cell 112 or 132 in such a way, the communication quality will deteriorate in the interference area or the overlapping area with the surrounding communication cell 112 or 132, even though the dynamic communication cell is additionally provided. To avoid such a situation, the interference detector 34 detects at least one of: interference that is occurring at the present time between the dynamic communication cell and the surrounding communication cell 112 or 132; interference that may occur at a future time when the dynamic communication cell being deployed approaches the surrounding communication cell 112 or 132; and interference that may occur at a future time between the newly deployed dynamic communication cell by the dynamic communication station CS switching from an inactive state to an active state and the surrounding communication cell 112 or 132.

The interference detector 34 may detect interference between the dynamic communication cell and the surrounding communication cell 112 or 132 based mainly on the communication measurement results at the present time by the dynamic communication station CS. In such a case, the dynamic communication station CS may be interpreted as being equipped (built-in) with the sensor 43 described below, which can directly or indirectly measure communication quality or interference. In particular, as mentioned above with respect to Figure 2, if the dynamic communication station CS is configured as an IAB node, the communication-device functional device 41 (IAB-MT), which is equipped with communication measurement functions similar to those of a general communication device 2 such as a smartphone, can be utilized as the sensor 43 or the interference detector 34. Specifically, the communication-device functional device 41 (IAB-MT) measures the communication quality or the interference at its own (the dynamic communication station CS's) location and provides it to the parent base station in the form of channel state information (CSI) and the like, similarly to a general communication device 2. If there is interference between the dynamic communication cell and the surrounding communication cell 112 or 132, the CSI and the like that is measured by the communication-device functional device 41 (IAB-MT) and provided to the parent base station includes indications such as "communication quality is low (due to interference)" or "there is interference".

The interference detector 34 may detect interference between the dynamic communication cell and the surrounding communication cell 112 or 132 based mainly on communication measurement results at the present time by the sensor 43 around the dynamic communication station CS. The sensor 43 In such a case can directly or indirectly measure the communication quality or the interference. As mentioned above, the sensor 43, such as an IoT device equipped with minimal communication functions, provides the communication measurement results to the RAN or the core network CN. Besides, the sensor 43 may provide the communication measurement results to nearby communication devices 2, dynamic communication stations CS, vehicles V, surrounding base stations 111 and the like, utilizing Bluetooth (trademark) or other short-range wireless communication technology, and from there relay or provide them to the RAN or the core network CN as necessary.

The interference detector 34 may estimate or predict interference that may occur at a future time between the dynamic communication cell and the surrounding communication cell 112 or 132 based on the activity history information collected by the activity history information collector 32. Specifically, the activity history information collector 32 collects as activity history information the past communication measurement results by at least one of the dynamic communication station CS whose interference is to be estimated, other dynamic communication stations CS, and one or more sensors 43.

For example, the communication measurement results collected by the activity history information collector 32, when the dynamic communication station CS whose interference is to be estimated or other dynamic communication stations CS deployed dynamic communication cells in the vicinity of the surrounding communication cell 112 or 132 in the past, are extremely useful for estimating interference that may occur at a future time. Specifically, in case the dynamic communication station CS whose interference is to be estimated or other dynamic communication stations CS deployed dynamic communication cells in a certain manner in the vicinity of the surrounding communication cell 112 or 132 in the past, and the communication measurement results indicating "interference exists" were acquired, it is highly likely that interference will occur between the surrounding communication cell 112 or 132 and the dynamic communication cell, if deployed in a similar manner under a similar situation by the dynamic communication station CS whose interference is to be estimated. Therefore, the interference reducer 35 described below implements interference reduction measures, such as not allowing the dynamic communication station CS to deploy the dynamic communication cell in such a manner, allowing the dynamic communication station CS to deploy the dynamic communication cell in a different manner, changing the deployment manner of the surrounding communication cell 112 or 132 and the like, to prevent the interference between the dynamic communication cell and the surrounding communication cell 112 or 132.

The interference reducer 35 implements an interference reduction measure to reduce interference between the dynamic communication cell and the surrounding communication cell 112 or 132 at the present time or a future time detected by the interference detector 34, in at least one of the dynamic communication cell and the surrounding communication cell 112 or 132.

The interference reduction measure to be implemented in at least one of the dynamic communication cell and the surrounding communication cell 112 or 132 may include at least one of the following: changing the provision direction (e.g., adjusting the provision direction or the provision range of the dynamic communication cell so that it does not overlap with the surrounding communication cell 112 or 132); changing the beam to be used (e.g., adjusting the irradiation direction, the irradiation range, the intensity and the like of at least one beam, so that the high-intensity beams of both communication cells will not be irradiated in the same location or area); changing the antenna to be used (e.g., switching at least a portion of the antenna responsible for irradiating a beam to the interference area to an inactive state); changing the frequency band to be used (e.g., having both communication cells mainly use different frequency bands, at least in the interference area); and applying various known inter-cell interference controls, also known as ICIC (Inter-Cell Interference Coordination).

Besides, the interference reducer 35 may implement as the interference reduction measure at least one of the following: disconnecting at least some of the communication devices 2 (not shown) currently connected to at least one of the dynamic communication cell and the surrounding communication cell 112 or 132; switching at least a portion of either the dynamic communication cell or the surrounding communication cell 112 or 132 to an inactive state (which reduces the interference area of both communication cells or the amount of interference in the interference area); and transitioning at least some of the communication devices currently connected to one of the dynamic communication cell and the surrounding communication cell 112 or 132 to the other communication cell by the handover, the redirection and the like (in addition, it is preferable to reduce interference from the one communication cell to the other communication cell by reducing the provision strength of the one communication cell).

As mentioned above, the interference reduction measures by the interference reducer 35 may be implemented in any of the dynamic communication cell (the dynamic communication station CS) and the surrounding communication cell 112 or 132 (the surrounding base station 111 or 131), but it is preferable to implement them in the dynamic communication cell that is generally smaller and more localized or flexible (in other words, more nimble) than the surrounding communication cell 112 or 132. As shown in Figure 2, if the dynamic communication station CS is configured as an IAB node, the base-station functional device 42 (IAB-DU), which functions as a (child) base station and provides the dynamic communication cell, implements the major portion of the interference reduction measures.

According to the present embodiment, interference between the dynamic communication cell provided by the dynamic communication station CS and the surrounding communication cell 112 or 132 provided by the surrounding base station 111 or 131 can be effectively reduced.

The present disclosure has been described above based on embodiments. It is obvious to those skilled in the art that various variations are possible in the combination of each component or each process in the exemplary embodiments, and that such variations are also encompassed within the scope of the present disclosure.

It should be noted that the structures, the operations, and the functions of each apparatus or each method described in the embodiments can be realized by hardware resources or software resources, or by the cooperation of hardware resources and software resources. As hardware resources, for example, processors, ROMs, RAMs and various integrated circuits can be used. As software resources, for example, programs such as operating systems and applications can be used.

The present disclosure may be expressed as the following items.

1. A communication control apparatus comprising at least one processor that performs:
   by an interference detector, detecting interference between a dynamic communication cell provided by a dynamic communication station to a communication device around it,
   and a surrounding communication cell around the dynamic communication station; and
   by an interference reducer, implementing an interference reduction measure to reduce interference between the dynamic communication cell and the surrounding communication cell, in at least one of the dynamic communication cell and the surrounding communication cell.
2. The communication control apparatus according to item 1, wherein the dynamic communication station is switchable between an active state in which the dynamic communication cell is provided and an inactive state in which the dynamic communication cell is not provided.
3. The communication control apparatus according to item 1 or 2, wherein
   the dynamic communication station is a moving communication station, and
   the dynamic communication cell is a moving communication cell.
4. The communication control apparatus according to item 3, wherein the dynamic communication station is attached to a movable object.
5. The communication control apparatus according to any of items 1 to 4, wherein the interference detector detects interference between the dynamic communication cell and the surrounding communication cell, based on the communication measurement result by the dynamic communication station.
6. The communication control apparatus according to item 5, wherein
   the dynamic communication station is the IAB (Integrated Access and Backhaul) node comprising the MT (Mobile Termination) that functions as a communication device to a parent base station and the DU (Distributed Unit) that functions as a child base station to a communication device and provides the dynamic communication cell, and
   the interference detector detects interference between the dynamic communication cell and the surrounding communication cell, based on the communication measurement result by the IAB node provided from the MT to the parent base station.
7. The communication control apparatus according to any of items 1 to 6, wherein the interference detector detects interference between the dynamic communication cell and the surrounding communication cell, based on the communication measurement result by a sensor around the dynamic communication station.
8. The communication control apparatus according to any of items 1 to 7, wherein the interference reduction measure includes at least one of the following: changing the provision direction; changing the beam to be used; changing the antenna to be used; changing the frequency band to be used; and applying the inter-cell interference coordination (ICIC), in at least one of the dynamic communication cell and the surrounding communication cell.
9. The communication control apparatus according to any of items 1 to 8, wherein the interference reducer implements at least one of the following as the interference reduction measure: disconnecting at least a portion of the communication devices currently connected to at least one of the dynamic communication cell and the surrounding communication cell; switching at least a portion of either the dynamic communication cell or the surrounding communication cell to an inactive state; and transitioning at least a portion of the communication devices currently connected to one of the dynamic communication cell and the surrounding communication cell to the other communication cell.
10. The communication control apparatus according to any of items 1 to 9, wherein the interference reducer implements the interference reduction measure in the dynamic communication cell.
11. A communication control method comprising:
   detecting interference between a dynamic communication cell provided by a dynamic communication station to a communication device around it, and a surrounding communication cell around the dynamic communication station; and
   implementing an interference reduction measure to reduce interference between the dynamic communication cell and the surrounding communication cell, in at least one of the dynamic communication cell and the surrounding communication cell.
12. A computer-readable medium storing a communication control program causing a computer to perform:
   detecting interference between a dynamic communication cell provided by a dynamic communication station to a communication device around it, and a surrounding communication cell around the dynamic communication station; and
   implementing an interference reduction measure to reduce interference between the dynamic communication cell and the surrounding communication cell, in at least one of the dynamic communication cell and the surrounding communication cell.

The present disclosure relates to interference control concerning dynamic communication cell.

1 wireless communication system, 2 communication device, 3 communication control apparatus, 11 5G wireless communication system, 12 4G wireless communication system, 13 satellite communication system, 31 movement information acquirer, 32 activity history information collector, 33 cell information acquirer, 34 interference detector, 35 interference reducer, 41 communication-device functional device, 42 base-station functional device, 43 sensor, 111 5G base station, 112 5G cell, 121 4G base station, 122 4G cell, 131 communication satellite, 132 satellite communication cell, 133 gateway.

## Claims

1. A communication control apparatus comprising at least one processor that performs:
by an interference detector, detecting interference between a dynamic communication cell provided by a dynamic communication station to a communication device around it, and a surrounding communication cell around the dynamic communication station; and
by an interference reducer, implementing an interference reduction measure to reduce interference between the dynamic communication cell and the surrounding communication cell, in at least one of the dynamic communication cell and the surrounding communication cell.

2. The communication control apparatus according to claim 1, wherein the dynamic communication station is switchable between an active state in which the dynamic communication cell is provided and an inactive state in which the dynamic communication cell is not provided.

3. The communication control apparatus according to claim 1, wherein
the dynamic communication station is a moving communication station, and
the dynamic communication cell is a moving communication cell.

4. The communication control apparatus according to claim 3, wherein the dynamic communication station is attached to a movable object.

5. The communication control apparatus according to claim 1, wherein the interference detector detects interference between the dynamic communication cell and the surrounding communication cell, based on the communication measurement result by the dynamic communication station.

6. The communication control apparatus according to claim 5, wherein
the dynamic communication station is the IAB (Integrated Access and Backhaul) node comprising the MT (Mobile Termination) that functions as a communication device to a parent base station and the DU (Distributed Unit) that functions as a child base station to a communication device and provides the dynamic communication cell, and
the interference detector detects interference between the dynamic communication cell and the surrounding communication cell, based on the communication measurement result by the IAB node provided from the MT to the parent base station.

7. The communication control apparatus according to claim 1, wherein the interference detector detects interference between the dynamic communication cell and the surrounding communication cell, based on the communication measurement result by a sensor around the dynamic communication station.

8. The communication control apparatus according to claim 1, wherein the interference reduction measure includes at least one of the following: changing the provision direction; changing the beam to be used; changing the antenna to be used; changing the frequency band to be used; and applying the inter-cell interference coordination (ICIC), in at least one of the dynamic communication cell and the surrounding communication cell.

9. The communication control apparatus according to claim 1, wherein the interference reducer implements at least one of the following as the interference reduction measure:
disconnecting at least a portion of the communication devices currently connected to at least one of the dynamic communication cell and the surrounding communication cell;
switching at least a portion of either the dynamic communication cell or the surrounding communication cell to an inactive state; and transitioning at least a portion of the communication devices currently connected to one of the dynamic communication cell and the surrounding communication cell to the other communication cell.

10. The communication control apparatus according to claim 1, wherein the interference reducer implements the interference reduction measure in the dynamic communication cell.

11. A communication control method comprising:
detecting interference between a dynamic communication cell provided by a dynamic communication station to a communication device around it, and a surrounding communication cell around the dynamic communication station; and
implementing an interference reduction measure to reduce interference between the dynamic communication cell and the surrounding communication cell, in at least one of the dynamic communication cell and the surrounding communication cell.

12. A computer-readable medium storing a communication control program causing a computer to perform:
detecting interference between a dynamic communication cell provided by a dynamic communication station to a communication device around it, and a surrounding communication cell around the dynamic communication station; and
implementing an interference reduction measure to reduce interference between the dynamic communication cell and the surrounding communication cell, in at least one of the dynamic communication cell and the surrounding communication cell.
